# EUROPÄISCHE PATENTSCHRIFT

(11) **EP 3 514 493 B1**
(45) Veröffentlichungstag und Bekanntmachung des Hinweises auf die Patenterteilung: **10.07.2024**
(21) Anmeldenummer: 19151540.2
(22) Anmeldetag: 14.01.2019
(51) Int. Cl.: G01C 21/00, G01S 7/48, G01S 17/89

(54) **VERFAHREN ZUR AUSRICHTUNG VON KARTEN EINES LIDAR-SYSTEMS**
METHOD FOR ALIGNING CARDS OF A LIDAR SYSTEM
PROCÉDÉ D'ORIENTATION DES CARTES D'UN SYSTÈME LIDAR

(30) Priorität: 19.01.2018 DE 102018200827
(43) Veröffentlichungstag der Anmeldung: 24.07.2019
(73) Patentinhaber: Robert Bosch GmbH, 70442 Stuttgart (DE)
(72) Erfinder: Scherer, Torsten, 72076 Tuebingen (DE); Ferch, Markus, 71717 Beilstein (DE); Haug, Florian, 71254 Ditzingen (DE); Yuen-Wille, Sheung Ying, 71229 Leonberg (DE); Leibold, Stefan, 74388 Talheim (DE); Von Collani, Yorck, 71717 Beilstein (DE)

(56) Entgegenhaltungen:
- EP-A2- 2 407 847
- US-A1- 2010 110 412
- US-A1- 2013 158 865

## Beschreibung

### Geänderte Beschreibung

Die Erfindung betrifft ein Verfahren zum Ausrichten bzw. zum Erstellen von Karten eines elektronischen Ortungssystems, insbesondere eines bei einem Fahrerassistenzsystem eines Kraftfahrzeugs bzw. Flurförderzeugs sowie beim automatisierten Fahren von Kraftfahrzeugen, Flurförderzeugen oder mobilen Robotern eingesetzten LIDAR-Ortungssystems. Gegenstand der vorliegenden Erfindung ist auch elektronisches Steuergerät zum Steuern des elektronischen Ortungssystems mittels des erfindungsgemäßen Verfahrens.

### Stand der Technik

Im Bereich der Kraftfahrzeugtechnik eingesetzte Fahrerassistenzsysteme umfassen bekanntermaßen eine Navigationseinrichtung zum Ermitteln einer Position des jeweiligen Kraftfahrzeugs. Dadurch ist es möglich, die momentane Position des Kraftfahrzeugs in einem vorgegebenen Koordinatensystem zu bestimmen und in einer digitalen Karte anzuzeigen. Die erforderliche Datenmenge der digitalen Karte, die dem Fahrer mittels eines solchen Fahrerassistenzsystems angezeigt werden kann, nimmt heutzutage stetig zu und umfasst auch sogenannte "Points of Interest" oder zu befahrende Fahrspuren.

Für eine Vielzahl von Fahrerassistenzsystemen sowie für automatisiertes Fahren ist die genaue Kenntnis der Position des eigenen Fahrzeugs erforderlich. So existieren Verfahren zur Ortung von Fahrzeugen, welche auf unterschiedlichen physikalischen Prinzipien beruhen, z.B. "Global Positioning Systems" (GPS), funktechnisch-basierte Ortungssysteme, bildbasierte Ortungssysteme mit einer Erkennung von visuellen Markern sowie sogenannte "LIDAR"-Ortungssysteme (LIDAR = Light Detection And Ranging). Ein LIDAR-basiertes Ortungsverfahren ist, im Gegensatz zu Kamera-basierten Ortungsverfahren, weniger empfindlich gegenüber Helligkeitsänderungen. Ähnlich wie bei anderen Ortungsverfahren benötigt ein LIDAR-System eine Karte, die als Referenz für die LIDAR-Ortung dient.

Bei dem zur Erstellung einer genannten Karte erforderlichen Kartierungsprozess fährt eine mit einem LIDAR-System ausgestattete Plattform den zu kartierenden Bereich systematisch ab, um eine 2D-Sicht der Umgebung mittels sogenannter

"SLAM"-Algorithmen (Simultaneous Localization and Mapping) zu erstellen. Dabei ist der Ursprung des Koordinatensystems einer so erzeugten LIDAR-Karte der Startpunkt für die Kartierungsfahrt. Die Lage des Ursprungs ist wiederum erforderlich, um die LIDAR-Karte mit einer anderen Karte vergleichen zu können.

Um mittels LIDAR ermittelte Positionsdaten z.B. für Transportaufgaben sinnvoll nutzen zu können, müssen die geographischen Positionsdaten auf semantische Positionsdaten referenziert werden können. Als Beispiel sind Blockflächen oder Regalplätze in einem Warenlager zu nennen, die oft mit einer Kombination aus Buchenstaben und Ziffern gekennzeichnet sind. Für die Referenzierung ist bisher ein manueller Nachbearbeitungsschritt im Kartierungsprozess notwendig, bei dem die LIDAR-Karte anhand einer bestehenden Karte manuell gegenüber semantischen Positionen und ggf. Orientierungen ausgerichtet wird. Dabei kann auch eine Ausrichtung auf einen bestehenden Gebäudeplan sinnvoll sein, damit sich ein Betrachter der LIDAR-Karte leichter zurecht findet. Der Kartierungsprozess nutzt dazu meist eine Benutzerschnittstelle (GUI), bei der ein Bediener die LIDAR-Karte, ähnlich wie bei einem Bildverarbeitungsprogramm, rotieren oder verschieben kann.

Die US 2013/158865 A1 befasst sich mit der Lokalisierung eines Objekts innerhalb einer globalen Karte, wobei aktuelle Sensordaten mit der Karte abgeglichen werden. Dabei wird neben der globalen Karte eine lokale Karte kreiert und die Position des sich bewegenden Objekts in der globalen Karte durch ein Matching zwischen der lokalen Karte und der globalen Karte bestimmt.

Die EP 2 407 847 A2 befasst sich mit einem Verfahren zu Orientierung eines selbsttätig verfahrbaren Gerätes, wie beispielsweise ein Saugroboter. Dabei wird von dem Gerät zunächst die Kartierung eines Gesamtgebietes und danach eine Unterteilung des Gesamtgebietes in Teilgebiete vorgenommen.

Die US 2010/110412 A1 befasst sich mit einem Verfahren zum Aktualisierung einer Umgebungskarte auf der Basis von Referenz-Landmarken, wobei die Karte auf der Basis von aktuellen Vermessungsdaten aktualisiert werden kann.

### Offenbarung der Erfindung

Der Erfindung liegt insbesondere der Gedanke zugrunde, dass bei einer Inbetriebnahme einer Flotte von Fahrzeugen mit LIDAR-Ortung aufgrund von relativ großen Änderungen in den Umgebungsdaten eine neue Kartierung erforderlich ist. Zudem sind die LIDAR-Sensoren auf jeweils unterschiedlichen Höhen in den jeweiligen Fahrzeugen der Flotte verbaut. Daher muss ein Bediener sämtliche neu angelegten Karten einzeln geographisch bzw. sogar räumlich manuell ausrichten.

Dem vorgeschlagenen Verfahren liegt daher die Idee zugrunde, das Ausrichten von LIDAR-Karten z.B. gegenüber einem existierenden Gebäudemodell und/oder einer existierenden anderen LIDAR-Karte automatisiert bzw. automatisierbar durchzuführen.

Dabei liegt jedoch insbesondere das Problem zugrunde, dass aufgrund der einem LIDAR-System immanenten Positionierungsungenauigkeit und/oder wegen umbaubedingter Änderungen der Umgebung der Startpunkt einer erneuten Kartierungsfahrt von einem ursprünglichen Startpunkt verschieden ist. Auch wenn eine Kartierungsfahrt immer von einer sogenannten Homebase/Ladestation startet, bleiben jedenfalls nur geringe Abweichungen von z.B. 1 Grad (räumliche Orientierung) bzw. von wenigen Zentimetern (geographische Position) für einen menschlichen Betrachter unbemerkt und sind damit nicht manuell korrigierbar. Eine entsprechend ungenaue Ausrichtung der Startposition einer erneuten Kartierungsfahrt führt aber im Ergebnis zu einer Karte, die von der vorherigen Karte abweicht. Daher müsste der Bediener bei der Inbetriebnahme einer Fahrzeugflotte eine Vielzahl von Karten erneut vollständig ausrichten.

Gemäß dem vorgeschlagenen Verfahren wird das Ausrichten von LIDAR-Karten dadurch automatisch bzw. automatisierbar durchführbar, dass auf der Grundlage einer ersten von dem Bediener ausgerichteten Karte alle weiteren bzw. zukünftig noch auszurichtenden Karten automatisch ausgerichtet werden können. Dabei ist es insbesondere auch möglich, bei verschiedenen Einbauhöhen der LIDAR-Sensoren in den jeweiligen Fahrzeugen erstellte Karten gegeneinander auszurichten, zumindest dann, wenn diese Karten sich nicht zu sehr voneinander unterscheiden.

Mit dem vorgeschlagenen Verfahren lässt sich die Anzahl von erforderlichen manuellen Eingriffen insbesondere in den folgenden beiden Situationen erheblich reduzieren:
- Bei der Inbetriebnahme von Fahrzeugflotten mit unterschiedlichen LIDAR-Einbauhöhen;
- Bei aufgrund von relativ großen Umgebungsänderungen erforderlichen, erneuten Kartierungfahrten.

Darüber hinaus ist die mit dem vorgeschlagenen Verfahren zur Ausrichtung genannter Karten erreichbare Genauigkeit erheblich höher als die bei einer manuellen Ausrichtung durch einen Bediener sich ergebende Genauigkeit. Insbesondere ist die Genauigkeit bei dem vorgeschlagenen Verfahren unabhängig von der Größe und Auflösung eines für die Ausrichtung verwendeten Monitors. Für die Inbetriebnahme von Flotten ist Dank des Verfahrens nur zu Beginn eine manuelle Ausrichtung einer ersten Karte gegenüber z.B. einem Gebäudeplan erforderlich. Weitere Karten, die von Fahrzeugen mit unterschiedlichen Einbauhöhen stammen, können dann mit dem Verfahren anhand der ersten Karte automatisch ausgerichtet werden.

Ein weiterer Vorteil des vorgeschlagenen Verfahrens liegt darin, dass der Startpunkt von Kartierungsfahrten damit frei wählbar ist.

Gemäß dem vorgeschlagenen Verfahren zum Ausrichten der wenigstens einen auszurichtenden Karte in Bezug auf ein Gebäudemodell sind folgende Schritte vorgesehen:
- Durchführen einer ersten Kartierungsfahrt, mittels der eine erste Karte generiert wird;
- Durchführen einer wenigstens zweiten Kartierungsfahrt zum Generieren wenigstens einer auszurichtenden zweiten Karte;
- Manuelles Ausrichten der ersten Karte mittels eines das Gebäudemodell repräsentierenden Gebäudeplans zum Generieren einer manuell ausgerichteten, ersten Karte;
- Automatisches Ausrichten der wenigstens einen auszurichtenden zweiten Karte anhand der manuell ausgerichteten ersten Karte zum automatischen Generieren einer ausgerichteten zweiten Karte.

Gemäß einer bevorzugten Ausgestaltung des vorgeschlagenen Verfahrens zum Ausrichten der wenigstens einen auszurichtenden Karte in Bezug auf eine bereits ausgerichtete Karte können folgende Schritte vorgesehen sein:
- Umwandeln der wenigstens einen auszurichtenden Karte und der bereits ausgerichteten Karte in sogenannte "Feature-Sets" (P0 und P1), z.B. Punktwolken, Liniensegmente oder dergleichen;
- Berechnen einer Transformation T zwischen den Feature-Sets P0 und P1 anhand eines Matcher-Algorithmus';
- Prüfen, ob mittels der Transformation T eine Übereinstimmung zwischen den wenigstens zwei Karten hergestellt werden kann;
- Ausrichten der auszurichtenden Karte anhand der berechneten Transformation T, wenn eine Übereinstimmung hergestellt werden kann.

Bei dem vorgeschlagenen Verfahren gemäß dieser Ausgestaltung kann ferner vorgesehen sein, dass eine Fehlermeldung ausgegeben wird, wenn keine Transformation T berechnet werden kann und/oder keine Übereinstimmung zwischen den wenigstens zwei Karten hergestellt werden kann.

Als Matcher-Algorithmus kann einer oder mehrere der folgenden Algorithmen angewendet werden:
- "Iterative closest point",
- "KD-Tree nearest neighbor search" (FLANN),
- "NDT-Matcher",
- "Brute force matching",
- "Particle Filtering".

Bei dem vorgeschlagenen Verfahren kann zudem vorgesehen sein, dass vor dem Berechnen einer Transformation T zwischen den Feature-Sets P0 und P1 anhand des Matcher-Algorithmus' in den Feature-Sets P0 und P1 enthaltene Daten verringert werden. Dadurch kann die Effizienz bzw. Rechenleistung bei der Berechnung der Transformation T erheblich gesteigert werden. Es ist anzumerken, dass die Transformation eine Translation und/oder eine Rotation sowie eine Kombination aus diesen beiden Operationen umfassen kann.

Die Erfindung kann insbesondere in mit Ortungssystemen ausgestatteten Kraftfahrzeugen, Flurförderzeugen oder mobilen Robotern zur Anwendung kommen.

Das erfindungsgemäße elektronische Steuergerät ist eingerichtet, um ein Ortungssystem bei einem genannten Kartierungsprozess mittels des erfindungsgemäßen Verfahrens zu steuern.

Weitere Vorteile und Ausgestaltungen der Erfindung ergeben sich aus der Beschreibung und den beiliegenden Zeichnungen.

Kurze Beschreibung der Zeichnungen
Fig. 1 zeigt ein erstes Ausführungsbeispiel des vorgeschlagenen Verfahrens zur automatisierten Ausrichtung von Lidarkarten gegenüber einem Gebäudemodell anhand eines Flussdiagramms.
Fig. 2 zeigt ein zweites Ausführungsbeispiel des vorgeschlagenen Verfahrens zur automatisierten Ausrichtung von Lidarkarten gegenüber einer anderen Lidarkarte anhand eines Flussdiagramms.

### Beschreibung von Ausführungsbeispielen

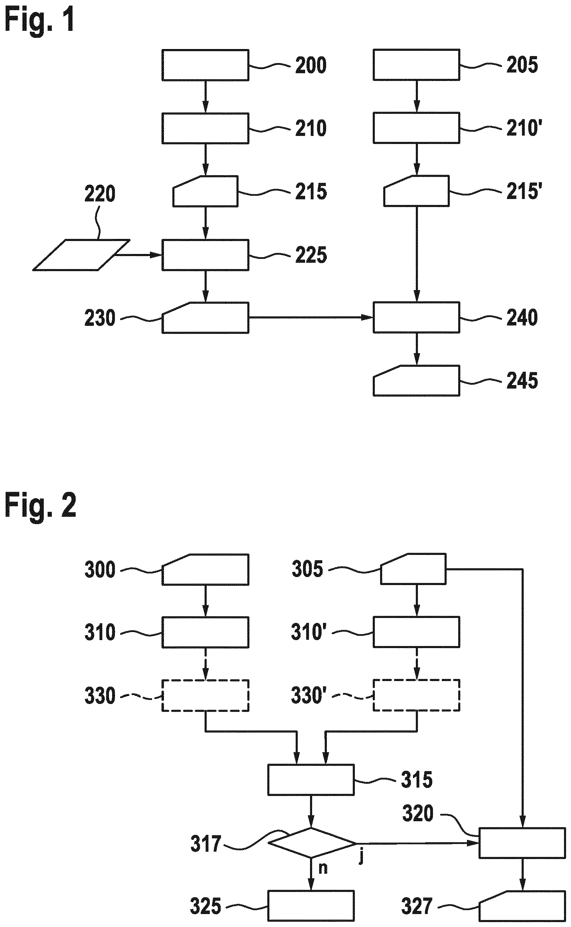

Fig. 1 zeigt ein Verfahren zur automatisierten Ausrichtung von Lidarkarten gegenüber einem Gebäudemodell. Das Verfahren geht zunächst von einer ersten Kartierungsfahrt 200 aus, mittels der eine erste Lidarkarte generiert wird 210 und dann als Karte vorliegt 215. Parallel dazu wird durch eine zweite Kartierungsfahrt 205 eines mittels des Verfahrens auszurichtende zweite Lidarkarte generiert 210' und liegt dann als Karte ebenfalls vor 215`.

Die vorliegende erste Karte 215 wird mittels eines vorliegenden Gebäudeplans 220 für das Gebäudemodell seitens eines Bedieners manuell ausgerichtet 225, so dass eine manuell ausgerichtete, erste Karte 230 vorliegt. Anhand der so ausgerichteten ersten Karte 230 wird die generierte zweite Karte 215' mittels des nachfolgend anhand der Fig. 2 beschriebenen Verfahrens automatisch ausgerichtet 240. Somit liegt im Ergebnis eine automatisch ausgerichtete, zweite Karte 245 vor.

Die nachfolgend anhand der Fig. 2 beschriebenen Verfahrensschritte zur automatischen bzw. automatisierten Kartenausrichtung anhand einer anderen Lidarkarte sind insbesondere als Teil eines beschriebenen Kartierungsprozesses zu betrachten und ermöglichen die Einsparung zumindest eines manuellen Schrittes bei der Erstellung bzw. Ausrichtung von entsprechendem Kartenmaterial. Im Falle des in Fig. 2 gezeigten Verfahrens entspricht dies einer entsprechenden Einsparung bei der Ausrichtung 240 der zweiten Karte 205, 245.

Bei dem Verfahren bestimmt der Bediener zunächst eine auszurichtende erste Karte 305 (K1), sowie eine zweite Karte 300 (K0), an der die erste Karte 305 ausgerichtet werden soll. Die Karten 300, 305 werden in einem ersten Schritt in Feature-Sets (P0 und P1) umgewandelt 310, 310'. Danach wird anhand eines an sich bekannten Matcher-Algorithmus' eine Transformation T (Translation und/oder Rotation) zwischen den Feature-Sets P0 und P1 berechnet 315.

Im Anschluss daran wird geprüft 317, ob mittels der Transformation T eine Übereinstimmung ("Match") zwischen den beiden Karten 300, 305 hergestellt werden konnte. Ist diese Bedingung erfüllt, dann wird die Karte 305 mittels der berechneten Transformation T ausgerichtet 320, so dass im Ergebnis eine automatisch ausgerichtete Karte vorliegt 327.

Wenn mittels des Matcher-Algorithmus' keine Transformation ermittelt werden kann, da sich z.B. die beiden Feature-Sets P0 und P1 zu stark unterscheiden, dann löst das Verfahren eine Fehlermeldung aus 325, so dass der Bediener diesen Schritt ausnahmsweise manuell ausführen kann.

Beispiele für genannte, geeignete Matchingverfahren sind:
- "Iterative closest point",
- "KD-Tree nearest neighbor search" (FLANN),
- "NDT-Matcher" = im Bereich der Laser-basierten Vermessung zum sog. SLAM (Simultaneous Localization And Mapping) bekanntermaßen angewendeter "Normal Distributions Transform"-Algorithmus,
- "Brute force matching",
- "Particle Filtering".

Zur Steigerung der Effizienz des Matcher-Algorithmus' kann optional noch eine in der Fig. 2 gestrichelt eingezeichnete Vorverarbeitungsstufe durchgeführt werden 330, 330', bei der die in den Feature-Sets P0 und P1 enthaltenen Daten vorher noch "ausgedünnt" bzw. verringert werden. Für diese Ausdünnung kann ein genanntes KD-Tree Verfahren eingesetzt werden. Mittels der Ausdünnung kann, zusätzlich zu einer erheblichen Verbesserung der Effizienz bzw. Performance, insbesondere auch ein robusteres Matching-Ergebnis erzielt werden, wobei bevorzugt auch die folgenden beiden Ziele verfolgt werden:
1. Beseitigen von sogenannten "Outliern", d.h. Glättung der Feature-Sets durch Eliminieren von alleinstehenden Reflexpunkten;
2. Erhalt der äußeren Kontur und verstärktes Ausdünnen innenliegender Features der Feature-Sets.

Die genannten Verfahrensschritte bzw. Maßnahmen beruhen insbesondere auf der Tatsache, dass vorliegende Gebäudestrukturen in guter Näherung als stabil betrachtet werden können und die Gebäudestrukturen zudem gegenüber der Bauhöhe von LIDAR-Sensoren (höhen-)unabhängig ist.

Das beschriebene Verfahren kann in Form eines Steuerprogramms für ein elektronisches Steuergerät zum Betrieb eines Ortungssystems oder in Form einer oder mehrerer entsprechender elektronischer Steuereinheiten (ECUs) realisiert werden.

## Patentansprüche

1. Verfahren zum Ausrichten von Karten eines elektronischen Ortungssystems, insbesondere eines bei einem Fahrerassistenzsystem eines Kraftfahrzeugs bzw. Flurförderzeugs, beim automatisierten Fahren von Kraftfahrzeugen, Flurförderzeugen oder bei mobilen Robotern eingesetzten LIDAR-Ortungssystems, wobei wenigstens eine auszurichtende Karte (215', 305) des elektronischen Ortungssystems in Bezug auf ein Gebäudemodell (220) und/oder in Bezug auf eine bereits ausgerichtete Karte (300) ausgerichtet wird (240, 320), wobei die folgenden Schritte umfasst sind:
- Durchführen einer ersten Kartierungsfahrt (200), mittels der eine erste Karte (215) generiert wird (210);
- Durchführen einer wenigstens zweiten Kartierungsfahrt (205) zum Generieren (210`) wenigstens einer auszurichtenden zweiten Karte (215');
- Manuelles Ausrichten (225) der ersten Karte (215) mittels eines das Gebäudemodell repräsentierenden Gebäudeplans (220) zum Generieren einer manuell ausgerichteten, ersten Karte (230);
- Automatisches Ausrichten (240) der wenigstens einen auszurichtenden zweiten Karte (215') anhand der manuell ausgerichteten ersten Karte (230) zum automatischen Generieren einer ausgerichteten zweiten Karte (245).

2. Verfahren nach Anspruch 1 zum Ausrichten der wenigstens einen auszurichtenden zweiten Karte (215', 305) in Bezug auf eine bereits ausgerichtete erste Karte (300), weiter **gekennzeichnet durch** folgende Schritte:
- Umwandeln (310, 310`) der wenigstens einen auszurichtenden zweiten Karte (215', 305) und der bereits ausgerichteten ersten Karte (300) in Feature-Sets (P0 und P1);
- Berechnen (315) einer Transformation T zwischen den Feature-Sets P0 und P1 anhand eines Matcher-Algorithmus';
- Prüfen (317), ob mittels der Transformation T eine Übereinstimmung zwischen den wenigstens zwei Karten (215', 305, 300) hergestellt werden kann;
- Ausrichten (320) der auszurichtenden zweiten Karte (215', 305) anhand der berechneten (315) Transformation T, wenn eine Übereinstimmung hergestellt werden kann.

3. Verfahren nach Anspruch 2, **dadurch gekennzeichnet, dass** eine Fehlermeldung ausgegeben wird (325), wenn keine Transformation T berechnet (315) werden kann und/oder keine Übereinstimmung zwischen den wenigstens zwei Karten (215', 305, 300) hergestellt werden kann.

4. Verfahren nach Anspruch 2 oder 3, **dadurch gekennzeichnet, dass** als Matcher-Algorithmus einer oder mehrere der folgenden Algorithmen angewendet wird bzw. werden:
- "Iterative closest point",
- "KD-Tree nearest neighbor search" (FLANN),
- "NDT-Matcher",
- "Brute force matching",
- "Particle Filtering".

5. Verfahren nach einem der Ansprüche 2 bis 4, **dadurch gekennzeichnet, dass** vor dem Berechnen (315) einer Transformation T zwischen den Feature-Sets P0 und P1 anhand des Matcher-Algorithmus' in den Feature-Sets P0 und P1 enthaltene Daten verringert werden (330, 330').

6. Elektronisches Steuergerät, welches eingerichtet ist, ein Ortungssystem insbesondere eines Kraftfahrzeugs, eines Flurförderzeugs oder eines mobilen Roboters mittels eines Verfahrens gemäß einem der Ansprüche 1 bis 5 zu steuern.

## Claims

1. Method for aligning maps of an electronic locating system, in particular of a LIDAR locating system used in a driver assistance system of a motor vehicle or industrial truck, in the automated driving of motor vehicles, industrial trucks or in mobile robots, wherein at least one map (215', 305) to be aligned of the electronic locating system is aligned (240, 320) in relation to a building model (220) and/or in relation to an already aligned map (300), wherein the following steps are comprised:
- carrying out a first mapping journey (200), by means of which a first map (215) is generated (210);
- carrying out an at least second mapping journey (205) for generating (210') at least one second map (215') to be aligned;
- manually aligning (225) the first map (215) by means of a building plan (220) representing the building model in order to generate a manually aligned first map (230);
- automatically aligning (240) the at least one second map (215') to be aligned on the basis of the manually aligned first map (230) in order to automatically generate an aligned second map (245).

2. Method according to Claim 1 for aligning the at least one second map (215', 305) to be aligned in relation to an already aligned first map (300), further **characterized by** the following steps:
- converting (310, 310') the at least one second map (215', 305) to be aligned and the already aligned first map (300) into feature sets (P0 and P1);
- calculating (315) a transformation T between the feature sets P0 and P1 on the basis of a matcher algorithm;
- checking (317) whether a match between the at least two maps (215', 305, 300) can be established by means of the transformation T;
- aligning (320) the second map (215', 305) to be aligned on the basis of the calculated (315) transformation T if a match can be established.

3. Method according to Claim 2, **characterized in that** an error message is output (325) if no transformation T can be calculated (315) and/or no match between the at least two maps (215', 305, 300) can be established.

4. Method according to Claim 2 or 3, **characterized in that** one or more of the following algorithms is or are applied as matcher algorithm:
- "iterative closest point",
- "KD-tree nearest neighbour search" (FLANN),
- "NDT matcher",
- "brute force matching",
- "particle filtering".

5. Method according to any of Claims 2 to 4, **characterized in that** before calculating (315) a transformation T between the feature sets P0 and P1 on the basis of the matcher algorithm, data contained in the feature sets P0 and P1 are reduced (330, 330').

6. Electronic control unit configured to control a locating system in particular of a motor vehicle, of an industrial truck or of a mobile robot by means of a method according to any of Claims 1 to 5.

## Revendications

1. Procédé d'orientation des cartes d'un système de localisation électronique, notamment d'un système de localisation LIDAR utilisé dans un système d'assistance à la conduite d'un véhicule à moteur ou d'un chariot de manutention, lors de la conduite automatisée de véhicules à moteur, de chariots de manutention ou de robots mobiles, dans lequel au moins une carte à orienter (215', 305) du système de localisation électronique est orientée (240, 320) par rapport à un modèle de bâtiment (220) et/ou par rapport à une carte déjà orientée (300), comprenant les étapes suivantes consistant à :
- exécuter un premier trajet de cartographie (200) au moyen duquel une première carte (215) est générée (210) ;
- exécuter au moins un second trajet de cartographie (205) pour générer (210') au moins une seconde carte à orienter (215') ;
- orienter manuellement (225) la première carte (215) au moyen d'un plan de bâtiment (220) représentant le modèle de bâtiment pour générer une première carte orientée manuellement (230) ;
- orienter automatiquement (240) ladite au moins une seconde carte à orienter (215') à l'aide de la première carte orientée manuellement (230) pour générer automatiquement une seconde carte orientée (245).

2. Procédé selon la revendication 1 destiné à orienter ladite au moins une seconde carte à orienter (215', 305) par rapport à une première carte déjà orientée (300), **caractérisé en outre par** les étapes suivantes consistant à :
- convertir (310, 310') ladite au moins une seconde carte à orienter (215', 305) et la première carte déjà orientée (300) en des ensembles de caractéristiques (P0 et P1) ;
- calculer (315) une transformation T entre les ensembles de caractéristiques P0 et P1 à l'aide d'un algorithme de mise en correspondance' ;
- vérifier (317) si une correspondance entre lesdites au moins deux cartes (215', 305, 300) peut être établie au moyen de la transformation T ;
- orienter (320) la seconde carte à orienter (215', 305) à l'aide de la transformation T calculée (315) lorsqu'une correspondance peut être établie.

3. Procédé selon la revendication 2, **caractérisé en ce qu'**un message d'erreur est délivré (325) si aucune transformation T ne peut être calculée (315) et/ou si aucune correspondance ne peut être établie entre lesdites au moins deux cartes (215' deux cartes (215', 305, 300).

4. Procédé selon la revendication 2 ou 3, **caractérisé en ce qu'**en tant qu'algorithme de mise en correspondance, un ou plusieurs des algorithmes suivants est ou sont appliqués :
- "Iterative closest point",
- "KD-Tree nearest neighbor search" (FLANN),
- "NDT-Matcher",
- "Brute force matching",
- "Particle Filtering".

5. Procédé selon l'une quelconque des revendications 2 à 4, **caractérisé en ce que**, préalablement au calcul (315) d'une transformation T entre les ensembles de caractéristiques P0 et P1 les données contenues dans les ensembles de caractéristiques P0 et P1 sont réduites (330, 330') à l'aide de l'algorithme de mise en correspondance.

6. Appareil de commande électronique qui est conçu pour commander un système de localisation, notamment d'un véhicule à moteur, d'un chariot de manutention ou d'un robot mobile, au moyen d'un procédé selon l'une quelconque des revendications 1 à 5.
